# EUROPEAN PATENT APPLICATION

(11) **EP 4 712 231 A2**
(43) Date of publication of application: **18.03.2026**
(21) Application number: 25194592.9
(22) Date of filing: 07.08.2025
(51) Int. Cl.: H01M 50/209, H01M 50/271, H01M 50/342, H01M 50/358, H01M 50/367, H01M 50/383

(54) **BATTERY MODULE**

(30) Priority: 13.09.2024 US 202463694560 P; 21.11.2024 KR 20240167531
(71) Applicant: SAMSUNG SDI CO., LTD., Yongin-si, Gyeonggi-do 17084 (KR)
(72) Inventor: JI, Yong Jun, 16678 Suwon-si, Gyeonggi-do (KR); YEOM, Gil Choun, 16678 Suwon-si, Gyeonggi-do (KR); JEON, Du Seong, 16678 Suwon-si, Gyeonggi-do (KR)
(74) Representative: Gulde & Partner

(57) **Abstract**

A battery module includes a housing (100), a plurality of battery cells (200), each of which includes an electrode assembly (210), a case (220) accommodating the electrode assembly (210), a cap plate (230) sealing the case (220), a pair of terminals (240) protruding from the cap plate (230), and a vent (250) between the terminals (240). The plurality of battery cells (200) is arranged in the housing (100) in a first direction. The battery module further comprises a holder (300) in the housing (100) and facing the cap plate (230), and an inner sheet (400) between the cap plate (230) and the holder (300) to cover the vent (250).

## Description

### BACKGROUND

### 1. Field

Aspects of embodiments of the present disclosure relate to a battery module.

### 2. Description of Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and generates energy through oxidation/reduction reactions when lithium ions are intercalated/deintercalated at the positive and negative electrodes.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure, a battery module capable of preventing or substantially preventing chain ignition of a battery cell is provided.

The above and other aspects and features of the present disclosure will be described in or will be apparent from the following description of some embodiments of the present disclosure.

According to one or more embodiments of the present disclosure, a battery module includes a housing, a plurality of battery cells, each of which includes an electrode assembly, a case accommodating the electrode assembly, a cap plate sealing the case, a pair of terminals protruding from the cap plate, and a vent between the terminals, wherein the plurality of batteries are arranged in the housing in a first direction, a holder arranged in the housing and facing the cap plate, and an inner sheet arranged between the cap plate and the holder to cover the vent. Hence, the inner sheet may prevent or at least reduce the risk of chain ignition due to thermal runaway of any one battery cell.

Embodiments of the battery module disclosed in the following can be combined as desired.

The holder may include a pair of first holder bodies facing the terminals. The pair of first holder bodies may be spaced apart from each other in a second direction intersecting the first direction. The holder may include a pair of second holder bodies extending from the first holder bodies in the second direction. The pair of second holder bodies may face the inner sheet. An advantage of this embodiment may be that the holder with the first and/or second holder bodies can hold and thereby fix positions of components, e.g. the inner sheet and/or bus bars within the battery module, facilitating assembly of the battery module.

A second holder body of the pair of second holder bodies may be in contact with the inner sheet. The second holder body of the pair of second holder bodies may press the inner sheet toward the cap plate. An advantage of this embodiment may be that the position of the inner sheet may further fixed by pressing the inner sheet towards to cap plate and/or that the pressing of the inner sheet towards and for example against the cap plate may create a seal.

The second holder bodies may be spaced apart from each other in the second direction. A distance between the second holder bodies may be greater than a length of the vent. An advantage of this embodiment may be that the sheet is not pressed against the vent, such that deformation of the cap plate by pressing the inner sheet against the cap plate is avoided or reduced and/or that at least some gas can pass where the inner sheet is not pressed by the second holder bodies and/or that gas passages are created where the inner sheet is not pressed by the second holder bodies, wherein gas is limited to pass via the gas passages.

The holder may further include a third holder body between the pair of second holder bodies. An advantage of this embodiment may be that the inner sheet can be mechanically supported by the third holder body against deformation, e.g. by gas building within the battery module.

The third holder body may include a plurality of holder vents arranged in the first direction. Each of the holder vents may face the vent of a battery cell of the plurality of battery cells. An advantage of this embodiment may be that gas passages via which gas may escape may be mechanically stabilized.

The housing may include a housing body accommodating the battery cell. The housing may include a housing cover connected to the housing body. The housing cover may face the cap plate. The holder may further include a reinforcing rib. The reinforcing rib may protrude from the second holder body away from the inner sheet and/or toward the housing cover. An advantage of this embodiment may be that the holder can be mechanically more stable or stiff with a low amount of material, keeping its weight and/or volume low.

The inner sheet may include a plurality of inner sheets stacked from the cap plate toward the holder. An advantage of this embodiment may be that the each or selected of the inner sheets of the plurality may be thin and easy to deform, thereby being adaptable to other shapes, which may increase a sealing effect of the inner sheets, while the entirety of the plurality is mechanically resistant against damage like e.g. tearing.

An area of each of the inner sheet or of the inner sheets may decrease toward the holder. For example, the thickness of the inner sheet or of the inner sheets may be smaller in the area that faces and/or contacts the holder than another area. Alternatively, the thickness may be reduced to zero. An advantage of this embodiment may be that the total volume of the inner sheet or the inner sheets and the holder is decreased.

The inner sheet may include an inner vent facing the vent. An advantage of this embodiment may be that gas can pass more easily through the inner vent towards to vent.

The battery module may further include an adhesive member between the cap plate and the second holder body and fixing the inner sheet. An advantage of this embodiment may be that undesired movements of the second holder body relative to the inner sheet are at least reduced or even avoided.

The inner sheet may further include a connection hole. The connection hole may be spaced apart from the inner vent. The adhesive member may pass through the inner sheet through the connection hole. Opposite end portions of the adhesive member may be respectively fixed to the cap plate and the second holder body. An advantage of this embodiment may be that the connection hole does at least not significantly affect the mechanical stability of the inner vent and/or that the adhesive member affixes the cap plate to the second holder with the inner sheet therebetween, i.e. between the cap plate and the second holder, thereby fixing the inner sheet, the cap plate and the second holder by the adhesive member in a material and space saving manner.

The connection hole and the inner vent may be spaced apart from each other in the second direction. An advantage of this embodiment may be that the connection hole does at least not significantly affect the mechanical stability of the inner vent and/or that the adhesive member does at least not significantly affect the mechanical stability of the inner vent.

The connection hole may extend in the first direction. An advantage of this embodiment may be that the connected hole may extend along or pass the inner vent or several inner vents along the first direction without interfering with the inner vent or the inner vents.

A cross-sectional area of the connection hole may increase or decrease toward the cap plate. An advantage of this embodiment may be the adhesive member can be mounted more easily.

The connection hole may include a plurality of unit connection holes arranged in the first direction. Each of the unit connection holes may be spaced apart from another one of the unit connection holes in the first direction. An advantage of this embodiment may be the inner sheet is more stable and thus easier to mount while still providing sufficient mounting space of adhesive members.

The battery module may further include an outer sheet. The outer sheet may be arranged between the holder and the housing. An advantage of this embodiment may be that that housing may be insulated from the holder and/or a bus bar held by the holder.

The outer sheet may include a pair of first outer sheets. The first outer sheets may be spaced apart from each other in the second direction and may face the first holder body. An advantage of this embodiment may be that that housing may be insulated from the holder and/or a bus bar held by the holder in a volume and/or weight saving manner.

The outer sheet may further include a second outer sheet. The second outer sheet may be arranged between the pair of first outer sheets and may face the second holder body. An advantage of this embodiment may be that the first outer sheets and the second outer sheet may together fill a volume, thereby avoiding free spaced that could result in components of the battery module moving within the housing.

The second outer sheet may include a plurality of outer vents. The outer vents may be arranged after each other in the first direction. Each of the outer vents may face the vent of a battery cell of the plurality of battery cells. Each of the outer vents may be aligned with one of the inner vents. An advantage of this embodiment may be that the inner sheet is further stabilized in areas next to the inner vents while still allowing for gas to escape via the inner vents, the outer vents and the vent of a battery cell.

### BRIEF DESCRIPTION OF THE DRAWINGS

The drawings included with this specification illustrate some embodiments of the present disclosure, and further describe aspects and features of the present disclosure together with the detailed description of the present disclosure. However, the present disclosure is not to be construed as being limited to the drawings.
FIG. 1 is a schematic exploded perspective view illustrating a configuration of a battery module according to an embodiment of the present disclosure;
FIG. 2 is a schematic perspective view illustrating a configuration of a battery cell according to an embodiment of the present disclosure;
FIG. 3 is a schematic cross-sectional view illustrating the configuration of the battery cell of FIG. 2;
FIG. 4 is a schematic view illustrating a configuration of an electrode assembly according to an embodiment of the present disclosure;
FIG. 5 is a schematic cross-sectional view illustrating an installation state of a holder according to an embodiment of the present disclosure;
FIG. 6 is a schematic plan view illustrating an installation state of the holder according to an embodiment of the present disclosure;
FIG. 7 is a schematic perspective view illustrating a configuration of the holder according to an embodiment of the present disclosure;
FIG. 8 is a schematic perspective view illustrating a configuration of an inner sheet according to an embodiment of the present disclosure;
FIG. 9 is a schematic plan view illustrating the configuration of the inner sheet of FIG. 8;
FIG. 10 is a schematic cross-sectional view illustrating the configuration of the inner sheet of FIG. 8;
FIG. 11 is a schematic cross-sectional view illustrating an installation state of an adhesive member according to an embodiment of the present disclosure;
FIGS. 12 and 13 are views each illustrating a modified example of a connection hole illustrated in FIG. 10;
FIG. 14 is a schematic view illustrating an operation state of the battery module according to an embodiment of the present disclosure;
FIG. 15 is a schematic view illustrating a configuration of connection holes according to another embodiment of the present disclosure;
FIG. 16 is a schematic view illustrating a modified example of unit connection holes illustrated in FIG. 15;
FIG. 17 is a schematic exploded perspective view illustrating a configuration of a battery module according to another embodiment of the present disclosure;
FIG. 18 is a schematic cross-sectional view illustrating the configuration of the battery module of FIG. 17;
FIG. 19 is a schematic plan view illustrating the configuration of the battery module of FIG. 17;
FIG. 20 is a schematic perspective view illustrating configurations of inner sheets according to an embodiment of the present disclosure;
FIG. 21 is a schematic view illustrating an installation state of an adhesive member according to an embodiment of the present disclosure;
FIG. 22 is a schematic exploded perspective view illustrating a configuration of a battery module according to another embodiment of the present disclosure;
FIG. 23 is a schematic cross-sectional view illustrating the configuration of the battery module of FIG. 22;
FIG. 24 is a schematic exploded perspective view illustrating a configuration of a battery module according to another embodiment of the present disclosure;
FIG. 25 is a schematic cross-sectional view illustrating the configuration of the battery module of FIG. 24;
FIG. 26 is a schematic cross-sectional view illustrating a configuration of a battery module according to another embodiment of the present disclosure; and
FIG. 27 is a schematic perspective view illustrating a configuration of an outer sheet according to an embodiment of the present disclosure.

### DETAILED DESCRIPTION

Herein, some embodiments of the present disclosure will be described, in further detail, with reference to the accompanying drawings.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the other part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

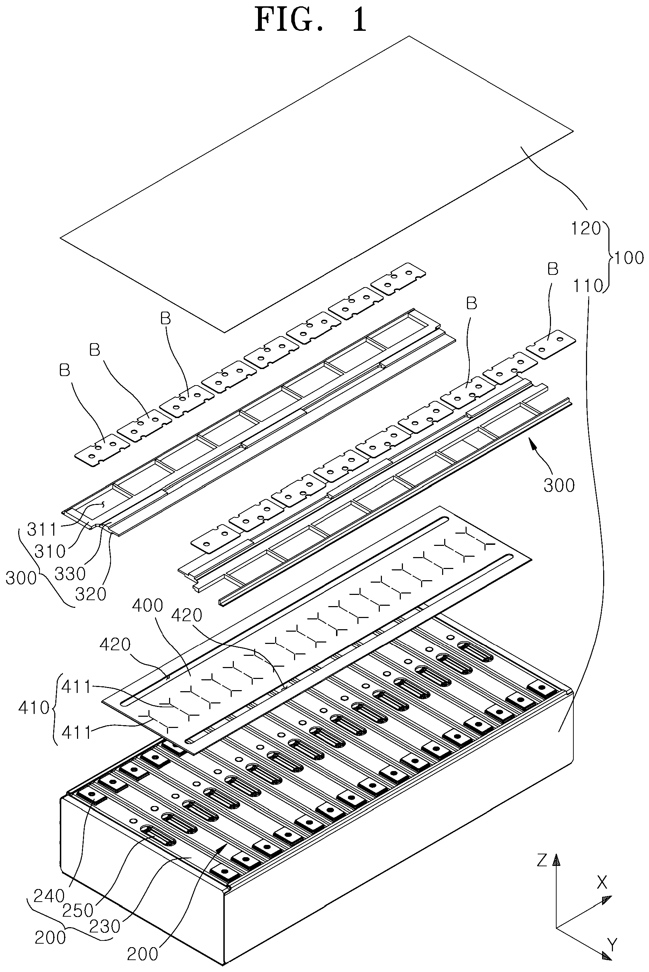

FIG. 1 is a schematic exploded perspective view illustrating a configuration of a battery module according to an embodiment of the present disclosure.

A first direction to be described below may be a direction parallel to an X-axis based on FIG. 1, a second direction may be a direction parallel to a Y-axis based on FIG. 1, and a third direction may be a direction parallel to a Z-axis based on FIG. 1.

Referring to FIG. 1, the battery module according to an embodiment may include a housing 100, a battery cell 200, a holder 300, and an inner sheet 400.

The housing 100 may support the battery cell 200 and protect the battery cell 200 from an external impact and foreign substances.

The housing 100 may include a housing body 110 and a housing cover 120.

The housing body 110 may provide a space in which the battery cell 200 is accommodated.

The housing body 110 according to an embodiment may be formed to have a box shape with an empty interior and an open side. For example, based on FIG. 1, the open side of the housing body 110 may be disposed perpendicular to the third direction and disposed to face upward. However, a cross-sectional shape of the housing body 110 is not limited to the quadrangular shape illustrated in FIG. 1 and may be varied to any suitable shape, such as a polygon, circle, oval, or the like.

The housing cover 120 may be connected to the housing body 110 to close an internal space of the housing body 110.

The housing cover 120 according to an embodiment may be formed to have a generally plate shape. The housing cover 120 may be disposed perpendicular to the third direction. The housing cover 120 may be disposed opposite to the open side of the housing body 110 in the third direction. The housing cover 120 may be fixed to an upper end portion of the housing body 110 by any of various types of connection methods, such as bolting, welding, fitting, and the like.

The battery cell 200 may function as a unit structure which stores and supplies power in the battery module. The battery cell 200 may be disposed inside the housing 100.

Herein, an example in which the battery cell 200 is a prismatic lithium-ion secondary battery will be described. However, the present disclosure is not limited thereto, and the battery cell 200 may be a lithium polymer battery or a cylindrical battery, for example.

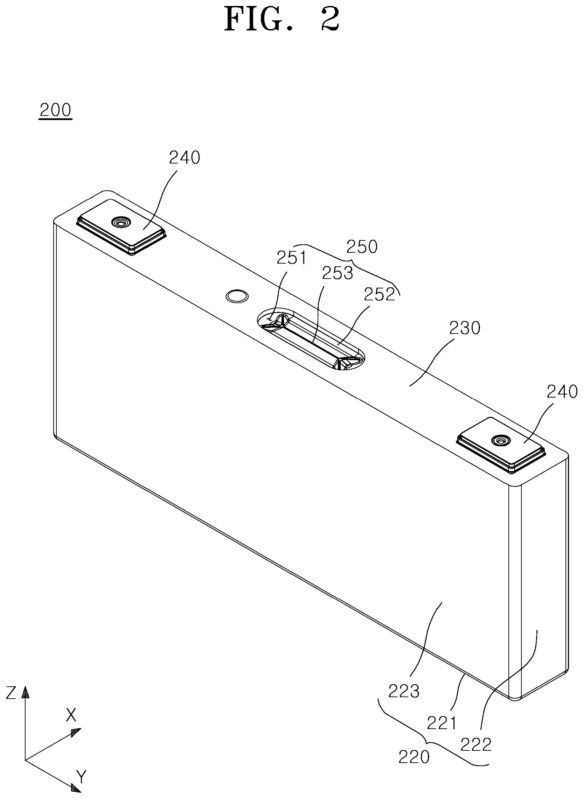

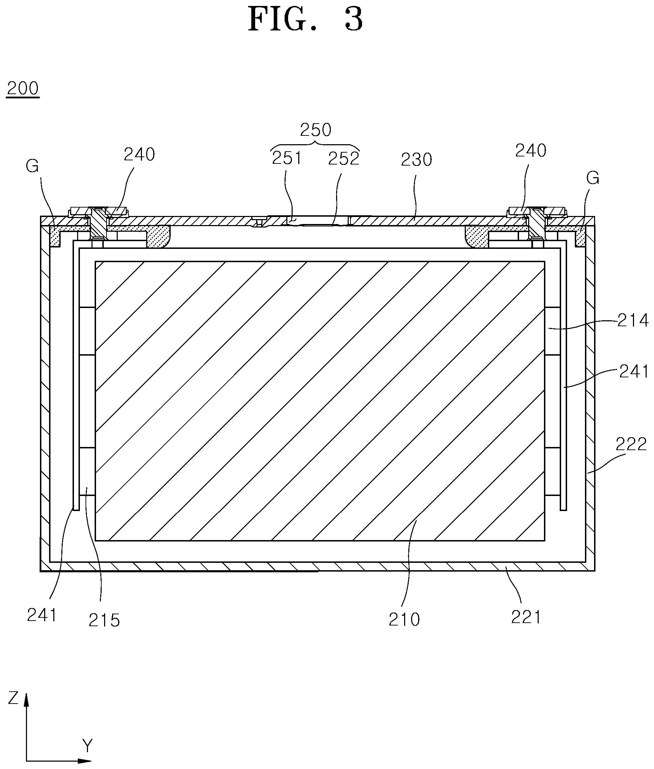

FIG. 2 is a schematic perspective view illustrating a configuration of a battery cell according to an embodiment of the present disclosure; and FIG. 3 is a schematic cross-sectional view illustrating the configuration of the battery cell of FIG. 2.

Referring to FIGS. 2 and 3, the battery cell 200 according to an embodiment includes an electrode assembly 210, a case 220, a cap plate 230, terminals 240, and a vent 250.

The electrode assembly 210 may function as a unit structure which performs charging and discharging operations of power in the battery cell 200. The electrode assembly 210 may be accommodated inside the case 220.

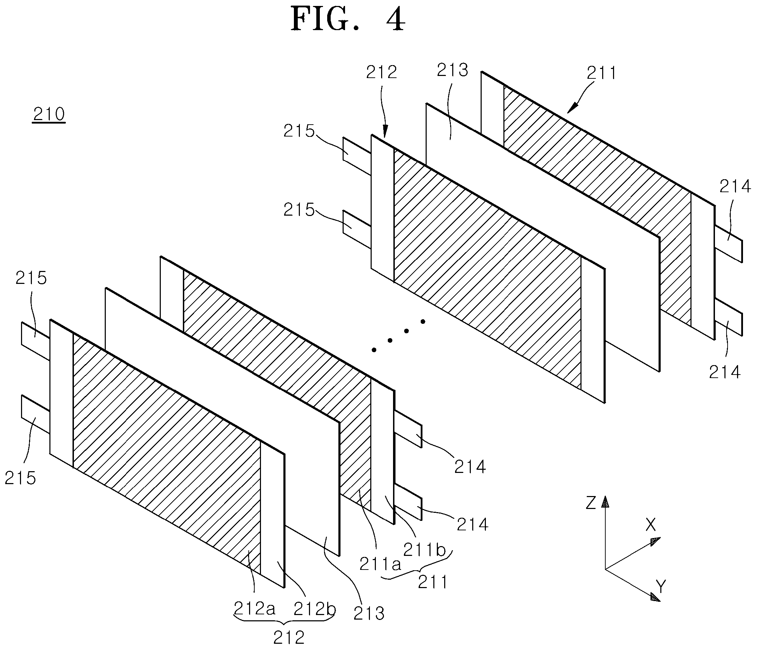

FIG. 4 is a schematic view illustrating a configuration of an electrode assembly according to an embodiment of the present disclosure.

Referring to FIGS. 2 to 4, the electrode assembly 210 according to an embodiment may include a first electrode 211, a second electrode 212, and a separator 213.

Herein, an example in which the electrode assembly 210 is formed in a stack type in which the first electrodes 211, the second electrodes 212, and the separators 213 are alternately stacked in the first direction will be described. However, the electrode assembly 210 is not limited thereto and, in an embodiment, may be formed in a jelly roll type in which the first electrode 211, the second electrode 212, and the separator 213 are sequentially stacked and wound around a winding axis.

The first electrode 211 may be a positive electrode of the electrode assembly 210.

The first electrode 211 according to an embodiment may be in the form of foil including a metal material, such as aluminum or an aluminum alloy. Both, or opposite, surfaces of the first electrode 211 may be disposed perpendicular to the first direction. However, a type, size, shape, and the like of the first electrode 211 are not particularly limited as long as the first electrode 211 has conductivity and does not cause a chemical change in the secondary battery. A shape of the first electrode 211 may be varied to any suitable shape, in addition to a rectangular shape.

In an embodiment, the first electrode 211 may be provided as a plurality of first electrodes. The plurality of first electrodes 211 may be arranged in the first direction. A number of first electrodes 211 may be varied to be any number depending on the charging capacity or the like of the battery cell 200.

The first electrode 211 may include a first active material layer 211a.

The first active material layer 211a may be provided in a form in which at least a part of the first electrode 211 is coated with the first active material layer 211a. In an embodiment, both, or opposite, surfaces of the first electrode 211 may be coated with the first active material layer 211a, or, in an embodiment, only one surface of the first electrode 211 may be coated with the first active material layer 211a.

In an embodiment, the first electrode 211 is a positive electrode, and the first active material layer 211a may include a positive electrode active material.

The positive electrode active material may be a compound capable of reversible intercalation and deintercalation of lithium (a lithiated intercalation compound). In an embodiment, as the positive electrode active material, one or more of composite oxides of a metal selected from the group consisting of cobalt, manganese, nickel, iron, and a combination thereof and lithium may be used.

As an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, and x+y+z =1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM) or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer 211a may further include a positive electrode conductive material.

The positive electrode conductive material imparts conductivity to the first active material layer 211a, and any suitable electronically conductive material that does not cause a chemical change may be used. Examples of the positive electrode conductive material may include carbon-based materials, such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, and the like, conductive polymers such as polyphenylene derivatives, or a mixture thereof.

The first active material layer 211a may further include a positive electrode binder.

The positive electrode binder easily binds particles constituting the positive electrode active material and also easily attaches the positive electrode active material to the first electrode 211.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, polyester resin, (meth)acrylic resin, phenol resin, epoxy resin, polyvinyl alcohol, and a combination thereof.

If the aqueous binder is used as the positive electrode binder, the aqueous binder may further include a cellulose series compound capable of imparting viscosity. As the cellulose series compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The first electrode 211 may include a first uncoated portion 211b which is not coated with the first active material layer 211a. The first uncoated portion 211b according to an embodiment may be disposed at an end region of the first electrode 211 in the second direction. However, the first uncoated portion 211b is not limited thereto and, in an embodiment, may be formed over an entire edge region of the first electrode 211.

The second electrode 212 may be a negative electrode of the electrode assembly 210.

The second electrode 212 according to an embodiment may be in the form of foil including a metal material, such as copper, a copper alloy, nickel, or a nickel alloy. Both, or opposite, surfaces of the second electrode 212 may be disposed perpendicular to the first direction. However, a type, size, shape, and the like of the second electrode 212 are not particularly limited as long as the second electrode 212 has conductivity and does not cause a chemical change in the secondary battery. A cross-sectional shape of the second electrode 212 may be varied to any suitable shape, in addition to the rectangular shape illustrated in FIG. 4.

In an embodiment, the second electrode 212 may be provided as a plurality of second electrodes. The plurality of second electrodes 212 may be arranged in the first direction. The plurality of first electrodes 211 and the plurality of second electrodes 212 may be alternately disposed in the first direction.

The second electrode 212 may include a second active material layer 212a and a second uncoated portion 212b.

The second active material layer 212a may be provided in a form in which at least a part of the second electrode 212 is coated with the second active material layer 212a. In an embodiment, both, or opposite, surfaces of the second electrode 212 may be coated with the second active material layer 212a, or, in an embodiment, only one surface of the second electrode 212 may be coated with the second active material layer 212a.

In an embodiment, the second electrode 212 is a negative electrode, and the second active material layer 212a may include a negative electrode active material.

The negative electrode active material may include a material capable of reversible intercalation/deintercalation of lithium ions, a lithium metal, a lithium metal alloy, a material capable of doping and dedoping of lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as amorphous, plate-like, flake-like, spherical, or fiber-like natural graphite or artificial graphite, and examples of the amorphous carbon may include soft carbon, hard carbon, mesophase pitch carbide, calcined coke, or the like.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedepoing of lithium, a Si-based negative electrode active material or a Sn-based negative electrode active material may be used. The Si-based negative electrode active material may be silicon, a silicon-carbon composite, SiOₓ (0<x≤2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon applied on surfaces of the silicon particles. For example, the silicon-carbon composite may include a secondary particle (core) in which primary silicon particles are aggregated and an amorphous carbon coating layer (shell) located on a surface of the secondary particle. The amorphous carbon may be located between the primary silicon particles, for example, such that the primary silicon particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or Sn-based negative electrode active material may be used in combination with a carbon-based negative electrode active material.

The second active material layer 212a may further include a negative electrode conductive material and a negative electrode binder.

The negative electrode conductive material imparts conductivity to the second active material layer 212a, and any suitable electronically conductive material that does not cause a chemical change may be used. Examples of the negative electrode conductive material may include carbon-based materials, such as natural graphite, artificial graphite, carbon black, acetylene black, Ketjen black, carbon fibers, carbon nanofibers, and carbon nanotubes, metal-based materials in the form of a metal powder or metal fibers containing copper, nickel, aluminum, silver, or the like., conductive polymers, such as polyphenylene derivatives, or a mixture thereof.

The negative electrode binder easily binds particles constituting the negative electrode active material and also easily attaches the negative electrode active material to the second electrode 212.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, polyester resin, (meth)acrylic resin, phenol resin, epoxy resin, polyvinyl alcohol, and a combination thereof.

If the aqueous binder is used as the negative electrode binder, the aqueous binder may further include a cellulose series compound capable of imparting viscosity. As the cellulose series compound, one or more of carboxymethyl cellulose, hydroxypropylmethyl cellulose, methyl cellulose, and an alkali metal salt thereof may be mixed and used. In an embodiment, the alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The second electrode 212 may include the second uncoated portion 212b which is not coated with the second active material layer 212a. The second uncoated portion 212b according to an embodiment may be disposed at a region of an end portion of the second electrode 212. However, the second uncoated portion 212b is not limited thereto and, in an embodiment, may be formed over an entire edge region of the second electrode 212.

The separator 213 may be disposed between the first electrode 211 and the second electrode 212. The separator 213 may prevent or substantially prevent a short circuit between the first electrode 211 and the second electrode 212 while allowing movement of lithium ions between the first electrode 211 and the second electrode 212. In an embodiment, the separator 213 may be disposed to entirely surround a surface region of the electrode assembly 210. Accordingly, the separator 213 can prevent or substantially prevent the first electrode 211 and the second electrode 212 from being directly exposed to the outside of the electrode assembly 210.

The separator 213 may be made of polyethylene, polypropylene, polyvinylidene fluoride, or a multilayer film of two or more layers thereof, and a mixed multilayer film such as a two-layer separator of polyethylene/polypropylene, a three-layer separator of polyethylene/polypropylene/polyethylene, or a three-layer separator of polypropylene/polyethylene/polypropylene may be used.

The separator 213 may include a porous substrate and a coating layer including an organic material, an inorganic material, or a combination thereof, which is positioned on one surface or both, or opposite, surfaces of the porous substrate.

The porous substrate may be a polymer film made of a polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more of the above materials.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer or may be in the form of a coating layer including (or containing) an organic material and a coating layer including (or containing) an inorganic material which are stacked on each other.

The electrode assembly 210 according to an embodiment may further include a first tab 214 and a second tab 215.

The first tab 214 may be connected to the first electrode 211.

The first tab 214 according to an embodiment may be in the form of foil extending from the first uncoated portion 211b of the first electrode 211 in a direction parallel to the second direction. In an embodiment, the first tab 214 may have a generally rectangular shape. However, a shape of the first tab 214 is not limited thereto and may be varied to any suitable shape.

In an embodiment, the first tab 214 may be formed integrally with the first electrode 211. For example, the first tab 214 may be a region of the first uncoated portion 211b remaining after a part of the first uncoated portion 211b is cut or removed during notching or the like. In an embodiment, the first tab 214 may be manufactured separately from the first electrode 211 and then connected to the first uncoated portion 211b by welding or the like. In an embodiment, a material of the first tab 214 may be the same as a material of the first electrode 211.

The first tab 214 may be provided as a plurality of first tabs. Each of the first tabs 214 may extend from a different one of the first uncoated portions 211b of the first electrodes 211. The neighboring first tabs 214 may be disposed to face each other in the first direction. That is, the plurality of first tabs 214 may be arranged in the first direction. The neighboring first tabs 214 may be disposed parallel to each other. The neighboring first tabs 214 may be in contact with each other and spaced apart from each other by a thickness of the separator 213.

The plurality of first tabs 214 may be provided on each first electrode 211. For example, a pair of first tabs 214 may be formed on each first electrode 211. The pair of first tabs 214 formed on each first electrode 211 may be arranged in the third direction.

The second tab 215 may be connected to the second electrode 212.

The second tab 215 according to an embodiment may be in the form of foil extending from the second uncoated portion 212b of the second electrode 212 in a direction parallel to the second direction. Extension directions of the first tab 214 and the second tab 215 may be opposite directions. In an embodiment, the second tab 215 may have a generally rectangular shape. However, a shape of the second tab 215 is not limited thereto and may be varied to any suitable shape.

In an embodiment, the second tab 215 may be formed integrally with the second electrode 212. For example, the second tab 215 may be a region of the second uncoated portion 212b remaining after a part of the second uncoated portion 212b is cut or removed during notching or the like. In an embodiment, the second tab 215 may be manufactured separately from the second electrode 212 and then connected to the second uncoated portion 212b by welding or the like. In an embodiment, a material of the second tab 215 may be the same as a material of the second electrode 212.

The second tab 215 may be provided as a plurality of second tabs. Each of the second tabs 215 may extend from a different one of the second uncoated portions 212b of the second electrodes 212. The neighboring second tabs 215 may be disposed to face each other in the first direction. That is, the plurality of second tabs 215 may be arranged in the first direction. The neighboring second tabs 215 may be disposed parallel to each other. The neighboring second tabs 215 may be in contact with each other and spaced by the thickness of the separator 213 from each other.

The plurality of second tabs 215 may be provided on each second electrode 212. For example, a pair of second tabs 215 may be formed on each second electrode 212. The pair of second tabs 215 formed on each second electrode 212 may be arranged in the third direction.

The case 220 may form a general exterior of the battery cell 200 and accommodate the electrode assembly 210. In an embodiment, the case 220 may include a conductive metal material, such as aluminum, an aluminum alloy, or nickel-plated steel.

The case 220 according to an embodiment may include a bottom portion 221, a first side portion 222, and a second side portion 223.

The bottom portion 221 may form an exterior of a lower side of the case 220. The bottom portion 221 according to an embodiment may have a rectangular plate shape. The bottom portion 221 may be disposed toward a bottom surface of the housing body 110. The bottom portion 221 may be disposed to face the bottom surface of the housing body 110 in the third direction.

The first side portion 222 may extend from the bottom portion 221 to form a part of an exterior of a side surface of the case 220.

The first side portion 222 according to an embodiment may have a rectangular plate shape extending from the bottom portion 221 in a direction parallel to the third direction. The first side portion 222 may be disposed perpendicular to the second direction. A lower end portion of the first side portion 222 may be connected to an edge of the bottom portion 221 disposed in the first direction. An upper end portion of the first side portion 222 may be disposed toward the housing cover 120. The upper end portion of the first side portion 222 may be disposed to face the housing cover 120 in the third direction.

The first side portion 222 may be provided as a pair of first side portions. The pair of first side portions 222 may be disposed at a distance (e.g., a predetermined distance) from each other and opposite to each other in the second direction. The pair of first side portions 222 may be disposed parallel to each other.

The second side portion 223 may extend from the bottom portion 221 to form a remaining portion of the exterior of the side surface of the case 220.

The second side portion 223 according to an embodiment may have a rectangular plate shape extending from the bottom portion 221 in a direction parallel to the third direction. The second side portion 223 may be disposed to intersect the first side portion 222. As an example, the second side portion 223 may be disposed perpendicular to the first direction.

A lower end portion of the second side portion 223 may be connected to an edge of the bottom portion 221 disposed in the second direction. An upper end portion of the second side portion 223 may be disposed toward the housing cover 120. The upper end portion of the second side portion 223 may be disposed to face the housing cover 120 in the third direction.

An area of the second side portion 223 may be greater than an area of the first side portion 222.

The second side portion 223 may be provided as a pair of second side portions. The pair of second side portions 223 may be disposed at a distance (e.g., a predetermined distance) from each other and opposite to each other in the first direction. The pair of second side portions 223 may be disposed parallel to each other.

Accordingly, the case 220 according to an embodiment may be formed to have a rectangular parallelepiped shape with an open upper end portion facing the housing cover 120.

The cap plate 230 may be connected to the case 220 to seal the case 220.

The cap plate 230 according to an embodiment may be formed to have a shape of a flat plate. The cap plate 230 may be disposed to face the case 220 in the third direction. As an example, an inner surface of the cap plate 230 may be disposed to face the open upper surface of the case 220. An outer surface of the cap plate 230 may be disposed to face an inner surface of the housing cover 120. The cap plate 230 may be disposed parallel to the bottom portion 221 of the case 220 and the housing cover 120.

In an embodiment, the cap plate 230 may be seated on upper end portions of the second side portion 223 and the first side portion 222. In an embodiment, the cap plate 230 may be inserted into the case 220, and a perimeter surface of the cap plate 230 may be in contact with inner surfaces of the second side portion 223 and the first side portion 222. The cap plate 230 may be connected to the upper end portions of the second side portion 223 and the first side portion 222 by any of various types of connection methods, such as welding, bolting, fitting, and the like.

The terminals 240 may be connected to the cap plate 230 and may protrude outward from the cap plate 230. The terminal 240 may be electrically connected to the electrode assembly 210.

The terminal 240 according to an embodiment may pass through the cap plate 230 in the third direction. An upper end portion of the terminal 240 may protrude outward from the cap plate 230, and a lower end portion of the terminal 240 may protrude to the inside of the case 220. However, a specific shape of the terminal 240 is not limited to the shapes illustrated in FIGS. 2 and 3 and may be varied to any suitable shape.

The terminal 240 may be formed of an electrically conductive material, such as aluminum, nickel, copper, or the like.

The terminal 240 may be provided as a pair of terminals. The pair of terminals 240 may be disposed at a distance (e.g., a predetermined distance) from each other in the second direction on the cap plate 230.

Each of the pair of terminals 240 may be connected to an electrode of the first electrode 211 and the second electrode 212 of the electrode assembly 210. Accordingly, each of the pair of terminals 240 may be one of a positive electrode terminal and a negative electrode terminal of the battery cell 200.

As an example, first terminal of the pair of terminals 240 may be connected to the first tab 214. In an embodiment, the first terminal of the pair of terminals 240 may be indirectly connected to the first tab 214 through a current collector 241 welded to the first tab 214. In an embodiment, the terminal 240 may be directly connected to the first tab 214.

In addition, a second terminal of the pair of terminals 240 may be connected to the second tab 215. In an embodiment, the second terminal of the pair of terminals 240 may be indirectly connected to the second tab 215 through the current collector 241 welded to the second tab 215. In an embodiment, the terminal 240 may be directly connected to the second tab 215.

An insulator G may be installed between the electrode assembly 210 and the cap plate 230. The insulator G may be provided as a pair of insulators. The pair of insulators G may be spaced apart from each other in the second direction between the electrode assembly 210 and the cap plate 230. Each of the pair of insulators G may be disposed to surround a different terminal 240. The insulator G may be made of an insulating material, such as polyethylene (PE), polypropylene (PP), polyethylene terephthalate (PET), rubber, or the like.

The vent 250 may be provided in the cap plate 230 and opened or closed in conjunction with an internal pressure of the case 220. If the internal pressure of the case 220 increases to a certain value (e.g., a set value) or greater due to an overcurrent, thermal runaway, or the like, the vent 250 may provide a discharge path for gas, flame, smoke, and the like generated inside the case 220. The vent 250 may be disposed between the terminals. As will be described below, a longitudinal direction of the vent 250 may be a direction parallel to the second direction, and a width direction of the vent 250 may be a direction parallel to the first direction.

In an embodiment, the vent 250 may include a vent hole 251 and a vent plate 252.

The vent hole 251 may have a shape of a hole passing through the cap plate 230 in the third direction. A lower side of the vent hole 251 may be connected to an internal space of the case 220. An upper side of the vent hole 251 may be connected to an external space of the cap plate 230. A cross-sectional shape of the vent hole 251 may be varied to any suitable shape, such as an oval, circle, polygon, or the like. In an embodiment, an area of the vent 250, a length of the vent 250, and a width of the vent 250, which will be described below, may be the same as an area of the vent hole 251, a length of the vent hole 251, and a width of the vent hole 251. In an embodiment, a ratio of the area of the vent 250, that is, the vent hole 251, to an area of an upper surface of the cap plate 230 may be 0.05 or more or 0.1.

The vent plate 252 may be opened or closed in conjunction with a change in the internal pressure of the case 220. That is, if the battery cell 200 operates normally, the vent plate 252 may maintain a closed state and seal the case 220. The vent plate 252 may be opened if the internal pressure of the case 220 increases to a certain value (e.g., a set value) or greater due to overcharging, fire, or the like of the battery cell 200 and may discharge flame, gas, smoke, and the like generated from the inside of the case 220 to the outside of the case 220.

The vent plate 252 according to an embodiment may be formed to have a shape of flat plate. The vent plate 252 may be disposed to face the vent hole 251 in the third direction. In an embodiment, a thickness of the vent plate 252 may be less than a thickness of the cap plate 230. An upper surface of the vent plate 252 may be connected to a lower surface of the cap plate 230 by any of various types of connection methods, such as welding, bolting, fitting, and the like. In an embodiment, the vent plate 252 may be inserted into the vent hole 251, and a perimeter surface of the vent plate 252 may be connected to an inner surface of the vent hole 251.

In an embodiment, a vent notch 253 may be formed in the vent plate 252 to induce a rupture operation of the vent plate 252. The vent notch 253 according to an embodiment may have a shape of a groove which is concavely recessed in an outer surface of the vent plate 252 to the inside of the vent plate 252. However, a shape of the vent notch 253 is not limited to the shape illustrated in FIG. 2 and may have any of various patterns on the vent plate 252.

The battery cell 200 may be provided as a plurality of battery cells. The plurality of battery cells 200 may be arranged in multiple rows inside the housing 100. As an example, the plurality of battery cells 200 may be arranged inside the housing body 110 in multiple rows in the first direction. However, an arrangement of the plurality of battery cells 200 is not limited thereto, and the plurality of battery cells 200 may be arranged inside the housing body 110 in multiple rows in the second direction or arranged in multiple rows in the first direction and the second direction.

The plurality of battery cells 200 may be electrically connected by a bus bar B.

The bus bar B according to an embodiment may be formed of an electrically conductive material, such as copper, nickel, aluminum, or the like. The bus bar B may be disposed between the battery cell 200 and the housing cover 120. Both, or opposite, end portions of the bus bar B may be respectively connected to one of the terminal 240 of any of a pair of battery cells 200 and the terminal 240 of the other of the pair of battery cells 200, which are disposed adjacent to each other in the first direction. Depending on a type of the terminals 240 connected to both, or opposite, end portions of the bus bar B, the bus bar B may connect the battery cells 200 disposed adjacent to each other in the first direction in series or in parallel. However, a shape of the bus bar B is not limited to the shape illustrated in FIG. 1 and may be varied to any suitable shape which may electrically connect the neighboring battery cells 200.

The bus bar B may be provided as a plurality of bus bars. Each bus bar B may be connected to the terminal 240 of a different battery cell 200. A number of bus bars B may be varied to be any number depending on a number of battery cells 200, the series or connection structure of the battery cells 200, or the like.

The holder 300 may be disposed inside the housing 100 and disposed to face the cap plate 230 of the battery cell 200. The holder 300 may support the bus bar B inside the housing 100 and protect the battery cell 200 from an external impact or the like. The holder 300 may be formed of an insulating material. Accordingly, the holder may be electrically insulated from the battery cell 200 and the bus bar B.

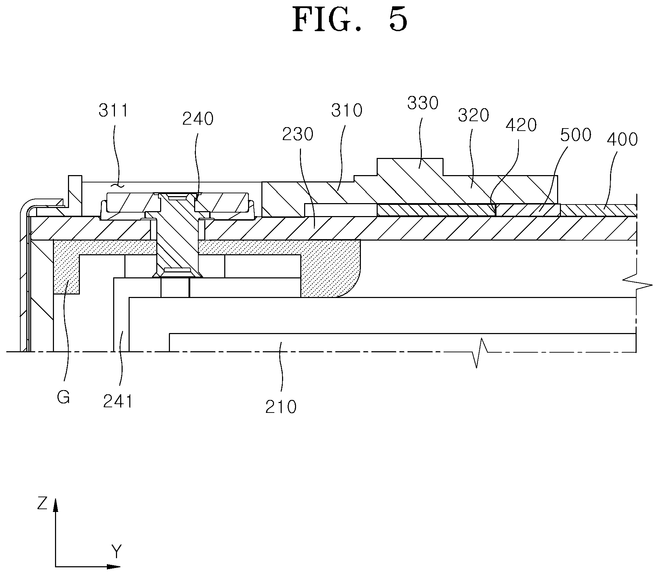

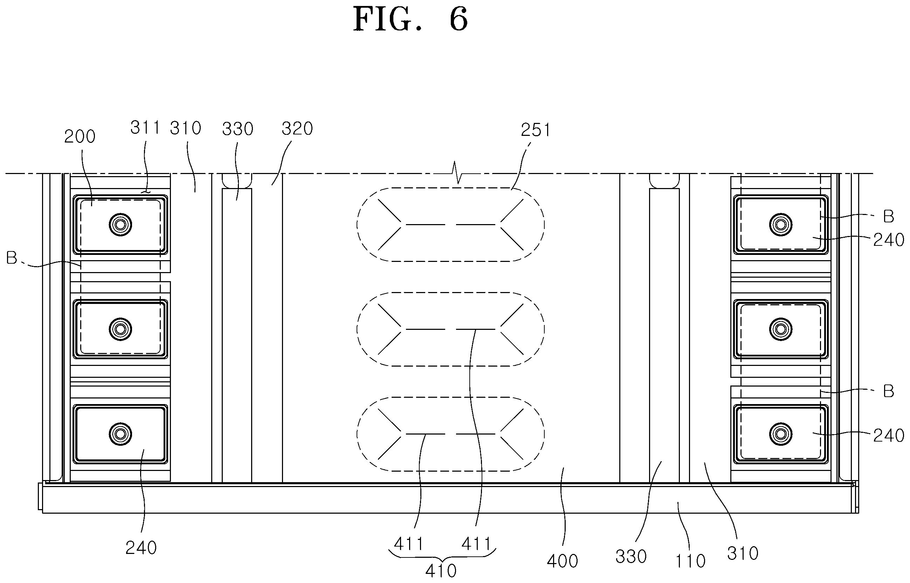

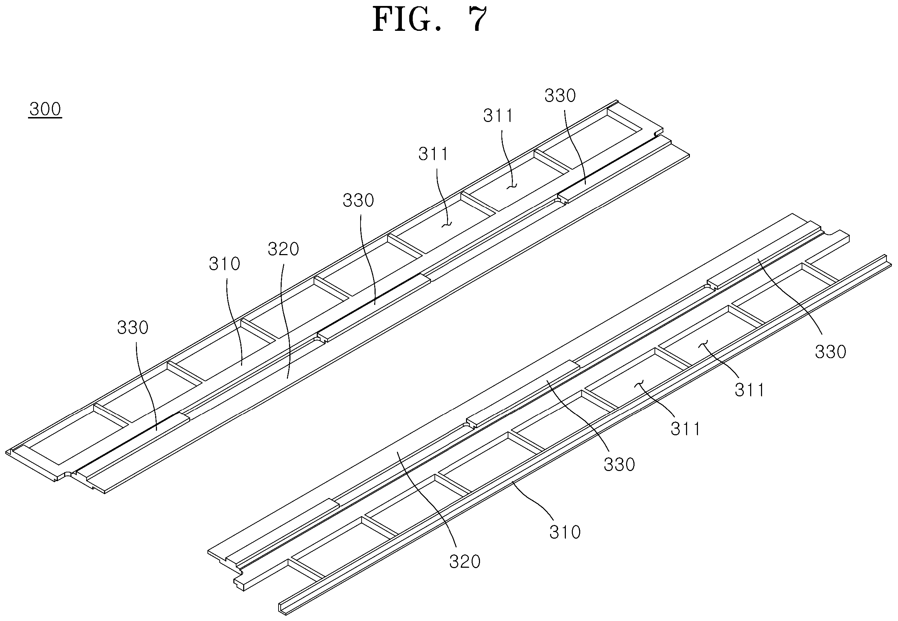

FIG. 5 is a schematic cross-sectional view illustrating an installation state of a holder according to an embodiment of the present disclosure; FIG. 6 is a schematic plan view illustrating an installation state of the holder according to an embodiment of the present disclosure; and FIG. 7 is a schematic perspective view illustrating a configuration of the holder according to an embodiment of the present disclosure.

Referring to FIGS. 5 to 7, the holder 300 according to an embodiment includes a first holder body 310 and a second holder body 320.

The first holder body 310 may form an exterior of a side of the holder 300 and may be disposed to face the terminal 240 of the battery cell 200.

The first holder body 310 may be provided as a pair of first holder bodies. The pair of first holder bodies 310 may be disposed at a distance (e.g., a predetermined distance) from each other in the second direction. Each first holder body 310 may be disposed to face one of the pair of terminals 240 spaced apart from each other in the second direction in the battery cell 200.

The first holder body 310 according to an embodiment may have a shape of a bar extending in the first direction. That is, a longitudinal direction of the first holder body 310 may be the first direction. The terminals 240 of the plurality of battery cells 200 arranged in the first direction may be disposed to face the single first holder body 310 in the third direction.

A length of the first holder body 310 in the second direction may be greater than a length of the terminal 240 in the second direction. In an embodiment, a ratio of an area of an upper surface of the terminal 240 to an area of an entire upper surface of the cap plate 230 may be in the range of 0.1 to 0.15 and for example at least 0.1 and/or up to 0.11, up to 0.12, up to 0.13, up to 0.14 or up to 0.15. In an embodiment, a ratio of a total area of lower surfaces of the pair of first holder bodies 310 to a total area of upper surfaces of the cap plates 230 of the plurality of battery cells 200 may be in the range of 0.1 to 0.15 and for example at least 0.1 and/or up to 0.11, up to 0.12, up to 0.13, up to 0.14 or up to 0.15. Accordingly, the first holder body 310 may cover an entire upper surface of the terminal 240 protruding from the cap plate 230.

The first holder body 310 may support the bus bar B. For example, a holder hole 311 passing through the first holder body 310 in the third direction may be formed in the first holder body 310. The holder hole 311 may be provided as a plurality of holder holes. The plurality of holder holes 311 may be arranged in the first direction. Each holder hole 311 may be disposed to face one of different terminals 240 arranged in the first direction. The bus bar B may be connected to the first holder body 310 by any of various types of connection methods, such as bolting, fitting, hooking, and the like. Both, or opposite, end portions of the bus bar B may be in contact with the terminals 240 disposed adjacent to each other through the holder hole 311 and may be connected to the terminals 240 by welding or the like.

The second holder body 320 may extend from the first holder body 310 and may be disposed to face the inner sheet 400 to be described below. The second holder body 320 may be in contact with the inner sheet 400 and may press the inner sheet 400 toward the cap plate 230.

The second holder body 320 may be provided as a pair of second holder bodies. Each of the pair of second holder bodies 320 may extend from a respective one of first holder bodies 310.

The second holder body 320 according to an embodiment may extend in a direction parallel to the second direction from the first holder body 310. The pair of second holder bodies 320 may extend from inner surfaces of the pair of first holder bodies 310 in the second direction to be opposite to the pair of first holder bodies 310. A length of the second holder body 320 in the first direction may be equal to the length of the first holder body 310 in the first direction. Accordingly, the cap plates 230 of the battery cells 200 arranged in the first direction may be disposed to face the single second holder body 320.

Lower surfaces of the pair of second holder bodies 320 may be disposed to face the upper surface of the cap plate 230 positioned between the pair of terminals 240. The pair of second holder bodies 320 may be disposed at a distance (e.g., a predetermined distance) from each other in the second direction. In an embodiment, a gap between the pair of second holder bodies 320 may be greater than the length of the vent 250, that is, the length of the vent hole 251 in the second direction. Accordingly, the second holder body 320 may not interfere with the gas or flame discharged through the vent 250 if the vent 250 is opened. In an embodiment, a ratio of a total area of lower surfaces of the pair of first holder bodies 310 and the pair of second holder bodies 320 to a total area of the upper surface of the cap plate 230, that is, a ratio of the area of the lower surface of the holder 300 to the total area of the upper surface of the cap plate 230, may be in the range of 0.1 to 0.95.

Upper surfaces of the pair of second holder bodies 320 may be disposed at a distance (e.g., a predetermined distance) from the lower surface of the housing cover 120.

The holder 300 according to an embodiment may further include a reinforcing rib 330.

The reinforcing rib 330 may reinforce the inherent rigidity of the holder 300. Accordingly, the reinforcing rib 330 can prevent or substantially prevent the second holder body 320 from being deformed by a pressure of gas or the like discharged through the vent 250 if the vent 250 is opened and prevent or substantially prevent the discharge path of gas or flame from being blocked due to the deformation of the second holder body 320.

The reinforcing rib 330 according to an embodiment may protrude from the second holder body 320 to the housing cover 120. A longitudinal direction of the reinforcing rib 330 may be the first direction. An upper end portion of the reinforcing rib 330 may be disposed at a distance (e.g., a predetermined distance) from the housing cover 120. In an embodiment, a height of the reinforcing rib 330 in the third direction may be 40 mm or less.

In an embodiment, the reinforcing rib 330 may be formed of a same material as the first holder body 310 and the second holder body 320 or, in an embodiment, may be formed of a material having greater rigidity than the first holder body 310 and the second holder body 320, such as steel or the like.

The reinforcing rib 330 may be provided as a plurality of reinforcing ribs. One or more reinforcing ribs 330 may be formed on each second holder body 320. In an embodiment, two or more reinforcing ribs 330 are formed on each second holder body 320, and the plurality of reinforcing ribs 330 formed on each second holder body 320 may be arranged at certain distances (e.g., set distances) in the first direction.

Although an example in which the holder 300 according to an embodiment includes the reinforcing rib 330 has been described above, the holder 300 is not limited thereto and may not include the reinforcing rib 330.

The inner sheet 400 may be disposed between the cap plate 230 and the holder 300. The inner sheet 400 may cover the vent 250 of the battery cell 200. The inner sheet 400 may block flame, gases, and the like discharged from the corresponding battery cell 200 if thermal runaway of any one battery cell 200 occurs from moving into the vent 250 of a neighboring battery cell 200.

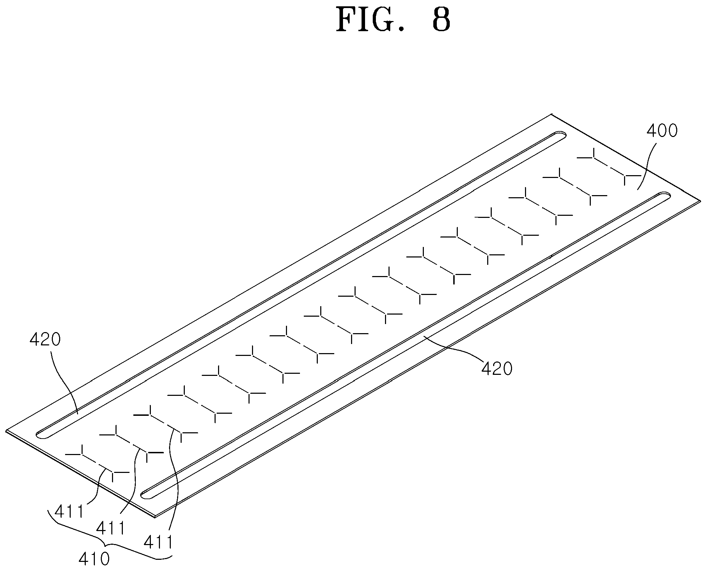

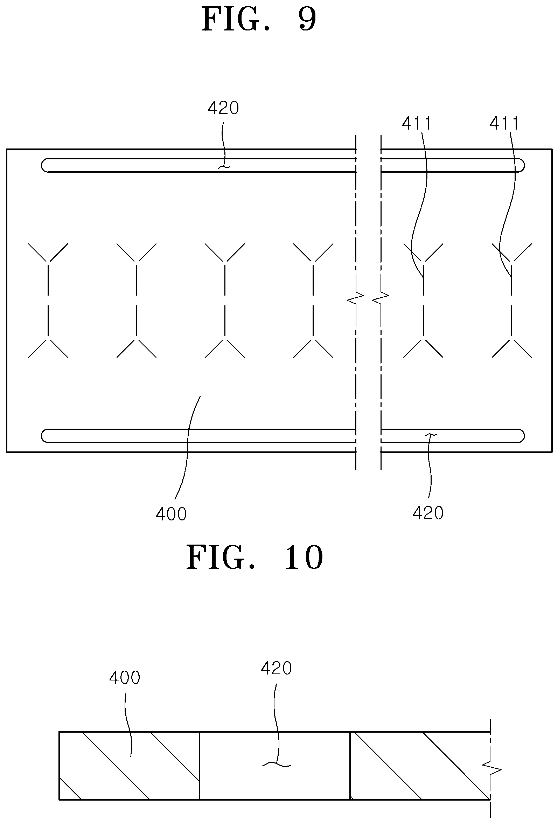

FIG. 8 is a schematic perspective view illustrating a configuration of an inner sheet according to an embodiment of the present disclosure; and FIG. 9 is a schematic plan view illustrating the configuration of the inner sheet of FIG. 8.

Referring to FIGS. 8 and 9, the inner sheet 400 according to the present embodiment may have a shape of a flat plate disposed perpendicular to the third direction. A lower surface of the inner sheet 400 may be seated on the upper surface of the cap plate 230 positioned between a pair of terminals 240.

A central portion of the inner sheet 400 may be disposed to face the vent 250 in the third direction. A length of the inner sheet 400 in the second direction may be greater than the length of the vent 250 in the second direction. Accordingly, both, or opposite, end portions of the inner sheet 400 spaced apart from each other in the second direction may be disposed to face the upper surface of the cap plate 230 positioned on both, or opposite, end portions of the vent 250. In an embodiment, the length of the inner sheet 400 in the first direction may be equal to the sum of lengths of the plurality of cap plates 230 in the first direction or may be greater than the sum of the lengths of the plurality of cap plates 230 in the first direction. Accordingly, the plurality of vents 250 arranged in the first direction may all be covered by the inner sheet 400.

An upper surface of the inner sheet 400 may be in contact with a lower surface of the second holder body 320. Both, or opposite, end portions of the upper surface of the inner sheet 400 may each be in contact with one of lower surfaces of the pair of second holder bodies 320. The second holder body 320 may press the inner sheet 400 toward the cap plate 230. Accordingly, the inner sheet 400 may not be separated from the cap plate 230 by the pressure of gas or the like discharged through the corresponding vent 250 if the vent 250 is opened.

The inner sheet 400 may include any of various types of insulating materials, such as a material with high heat resistance and insulation, for example, mica, aerosol, aerofoam, polyacrylonitrile (PAN) fiber, silicone foam, or the like.

In an embodiment, a thickness of the inner sheet 400 in the third direction may be 0.1 mm or more and 3 mm or less and for example at least 0.1 mm and/or up to 0.12 mm, up to 0.14 mm, up to 0.16 mm, up to 0.18 mm, up to 0.2 mm, up to 0.22 mm, up to 0.24 mm, up to 0.26 mm, up to 0.28 mm or up to 0.3 mm. In an embodiment, a ratio of an area of the inner sheet 400 to the total area of the upper surfaces of the cap plates 230 of the plurality of battery cells 200 may be 0.05 or more and 0.85 or less and for example at least 0.05 and/or up to 0.1, up to 0.15, up to 0.2, up to 0.25, up to 0.3, up to 0.25, up to 0.4, up to 0.45, up to 0.5, up to 0.55, up to 0.6, up to 0.65, up to 0.7, up to 0.75, up to 0.8 or up to 0.85.

The inner sheet 400 according to an embodiment may include an inner vent 410.

The inner vent 410 may be disposed to face the vent 250 of the battery cell 200. The inner vent 410 may induce opening or breakage of a central region of the inner sheet 400 facing the corresponding vent 250 if the vent 250 of the battery cell 200 is opened.

The inner vent 410 according to an embodiment may include a plurality of inner vent notches 411.

In an embodiment, the inner vent notch 411 may have a shape of a groove which is concavely formed from an outer surface of the inner sheet 400 to the inside of the inner sheet 400. That is, the inner vent notch 411 may induce an opening operation of the inner sheet 400 by the pressure of gas or the like discharged through the vent 250 by reducing a thickness of a part of the inner sheet 400 facing the vent 250. In an embodiment, a shape of the inner vent notch 411 may be formed to be the same as a shape of the vent notch 253 formed in the vent plate 252. However, a shape of the inner vent notch 411 is not limited thereto and may be varied to any suitable shape.

The plurality of inner vent notches 411 may be arranged in the first direction. Each inner vent notch 411 may be disposed to face the vent 250 of a different battery cell 200 in the third direction.

The battery module according to an embodiment may further include an adhesive member 500.

The adhesive member 500 may be disposed between the cap plate 230 and the second holder body 320 and fix the inner sheet 400 between the cap plate 230 and the second holder body 320. The adhesive member 500 may reinforce bonding strength between the inner sheet 400 and the cap plate 230 and bonding strength between the inner sheet 400 and the second holder body 320 by an inherent adhesive force. Accordingly, the adhesive member 500 can prevent or substantially prevent a closed contact state between the inner sheet 400 and the cap plate 230 from being released by the pressure of gas or the like discharged through the vent 250 if thermal runaway of the battery cell 200 occurs.

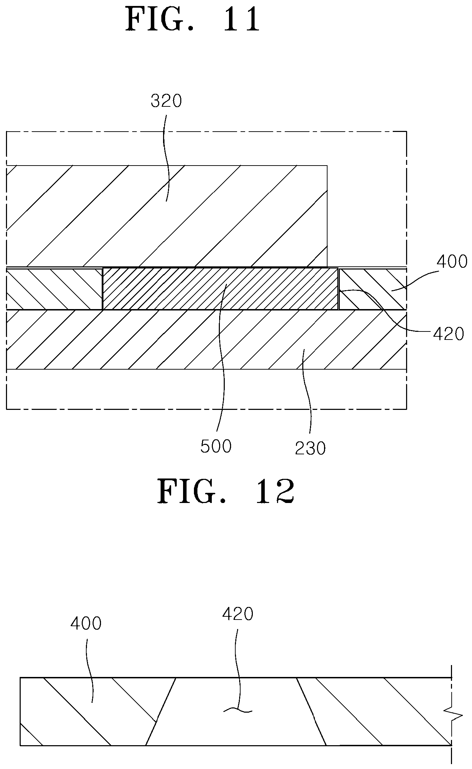

FIG. 10 is a schematic cross-sectional view illustrating the configuration of the inner sheet of FIG. 8; and FIG. 11 is a schematic cross-sectional view illustrating an installation state of an adhesive member according to an embodiment of the present disclosure.

Referring to FIGS. 1 to 11, the inner sheet 400 according to the present embodiment may further include a connection hole 420.

The connection hole 420 may be spaced apart from the inner vent 410 and guide a position of the adhesive member 500.

The connection hole 420 according to an embodiment may have a shape of a hole which vertically passes through the inner sheet 400 in the third direction. The connection hole 420 may have a shape of a long hole of which a longitudinal length extends in the first direction. In an embodiment, a ratio of the length of the connection hole 420 to the length of the inner sheet 400 in the first direction may be 0.95 or less and for example up to 0.95 and/or at least 0.9, at least 0.85, at least 0.8, at least 0.75, at least 0.7, at least 0.65, at least 0.6, at least 0.55 or at least 0.5. In an embodiment, a cross-sectional area of the connection hole 420 may be formed to have a constant size in the third direction.

The connection hole 420 and the inner vent 410 may be spaced apart from each other in the second direction. In an embodiment, the connection hole 420 may be provided as a pair of connection holes. A pair of connection holes 420 may be disposed to face each other in the second direction with the inner vent 410 interposed therebetween. In an embodiment, a distance between the connection hole 420 and the inner vent 410 may be 1 mm or more. Accordingly, the connection hole 420 can prevent or substantially prevent the adhesive member 500 from interfering with gas or the like discharged through the vent 250.

The adhesive member 500 according to an embodiment may include an adhesive material, such as polyurethane, epoxy, cyanoacrylate, or the like. The adhesive member 500 may pass the inner sheet 400 through the connection hole 420. As an example, the adhesive member 500 may be injected into the connection hole 420 in a liquid state and then cured. Upper and lower end portions of the adhesive member 500 may be fixed to the upper surface of the cap plate 230 and the lower surface of the second holder body 320, respectively. A perimeter surface of the adhesive member 500 may be fixed to the inner surface of the inner sheet 400 disposed to surround the connection hole 420. Accordingly, the adhesive member 500 may firmly fix the inner sheet 400 between the cap plate 230 and the second holder body 320.

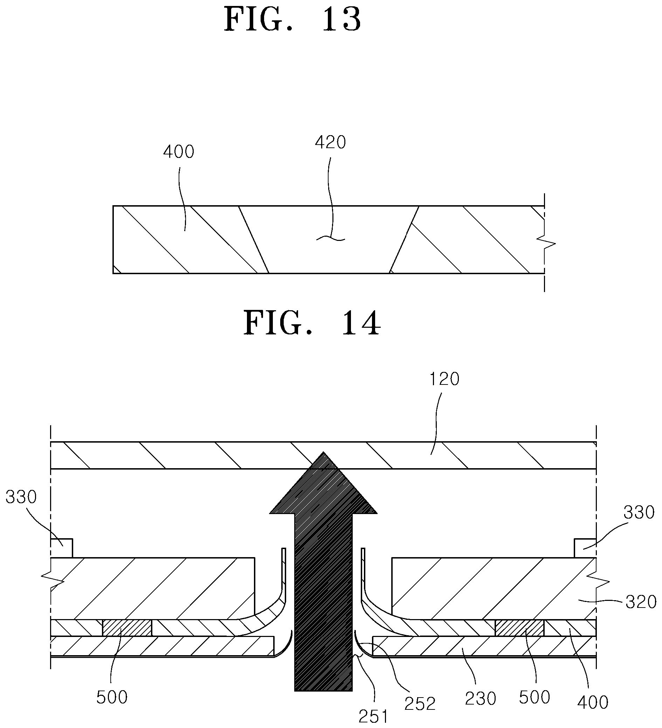

FIGS. 12 and 13 are views each illustrating a modified example of a connection hole illustrated in FIG. 10.

Referring to FIGS. 12 and 13, the connection hole 420 may be formed such that a cross-sectional area thereof changes toward the cap plate 230. As an example, as illustrated in FIG. 12, the cross-sectional area of the connection hole 420 may increase toward the cap plate 230, and, as illustrated in FIG. 12, the cross-sectional area of the connection hole 420 may decrease toward the cap plate 230. Accordingly, the connection hole 420 can increase an adhesive area between the adhesive member 500 and the cap plate 230 or an adhesive area between the adhesive member 500 and the second holder body 320 and prevent or substantially prevent the adhesive member 500 from being separated due to vertical movement between the cap plate 230 and the second holder body 320.

In the following, an operation of the battery module according to an embodiment of the present disclosure will be described.

FIG. 14 is a schematic view illustrating an operation state of the battery module according to an embodiment of the present disclosure.

Referring to FIGS. 1 to 14, if the vent 250 of a battery cell 200 is opened due to an overcurrent or thermal runaway, gas and/or flames can be discharged through the vent 250 of the battery cell 200. The inner sheet 400 can guide at least the gas and/or the flames. The inner sheet 400 may simply guide the gas and/or the flames. Alternatively or additionally, the inner sheet 400 may rip at the vent 250 to let the gas and/or the flames escape in a guided manner.

The inner vent notch 411 of the inner sheet 400, if provided and positioned to face the battery cell 200 in which the vent 250 is opened, may be opened by the pressure of the gas.

As an example, the inner sheet 400 positioned around the inner vent notch 411 may be bent toward a space between the pair of second holder bodies 320 by the pressure of the gas and may open the discharge path of gas and flame.

In this process, the inner sheet 400 positioned around the inner vent notch 411 may be disposed to face the inner surfaces of the pair of second holder bodies 320.

Accordingly, the gas and flame discharged through the vent 250 does not come into direct contact with the inner surfaces of the pair of second holder bodies 320 and can prevent or substantially prevent damage to the second holder body 320.

In addition, when the inner sheet 400 is opened or ripped open, the pressure applied to the second holder body 320 through the inner sheet 400 may be absorbed by the inherent rigidity of the reinforcing rib 330, and the second holder body 320 may maintain an initial shape without deformation.

As the pair of second holder bodies 320 are spaced apart from each other in the second direction, gas and flame may move into the space between the inner sheet 400 and the housing cover 120 without interfering with the second holder body 320.

The gas and/or the flames moving into the space between the inner sheet 400 and the housing cover 120 may not move into the vent 250 of the remaining battery cells 200 except for the battery cell 200 of which the vent 250 is opened by the inner sheet 400 and may be discharged to the outside of the battery module through an exhaust hole or the like provided in the housing cover 120 or the housing body 110.

In the following, a battery module according to another embodiment of the present disclosure will be described.

The battery module according to the present embodiment may differ from the battery module according to the previous embodiment of the present disclosure in a configuration of the connection hole 420.

Accordingly, in describing the battery module according to the present embodiment, only the configuration of the connection hole 420 which differs from that of the battery module according to the previous embodiment of the present disclosure will be described.

The description of the battery module according to the previous embodiment of the present disclosure may be applied to the remaining components of the battery module according to the present embodiment.

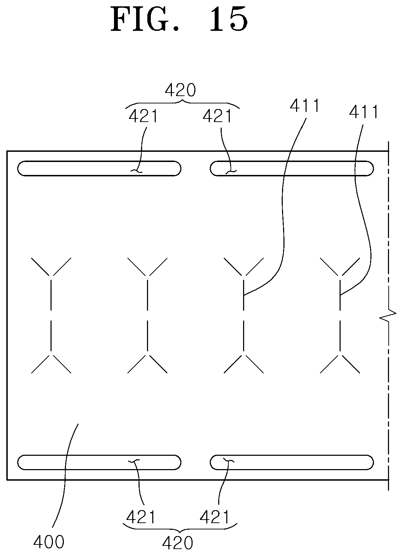

FIG. 15 is a schematic view illustrating a configuration of connection holes according to another embodiment of the present disclosure.

Referring to FIG. 15, the connection hole 420 according to the present embodiment may include a plurality of unit connection holes 421.

The unit connection hole 421 may be a unit structure of the connection hole 420 forming an exterior of a part of the connection hole 420. In an embodiment, the connection hole 420 may refer to a set of holes having two or more unit connection holes 421. Each of a pair of connection holes 420 disposed at both, or opposite, sides of the inner vent 410 may include two or more unit connection holes 421.

The unit connection hole 421 according to an embodiment may have an elliptical shape having a long axis in an extension direction of the connection hole 420, that is, the first direction. In an embodiment, a length of each unit connection hole 421 may be greater than a width of the vent 250 in the first direction. A plurality of unit connection holes 421 may be arranged at distances (e.g., predetermined distances) in the first direction.

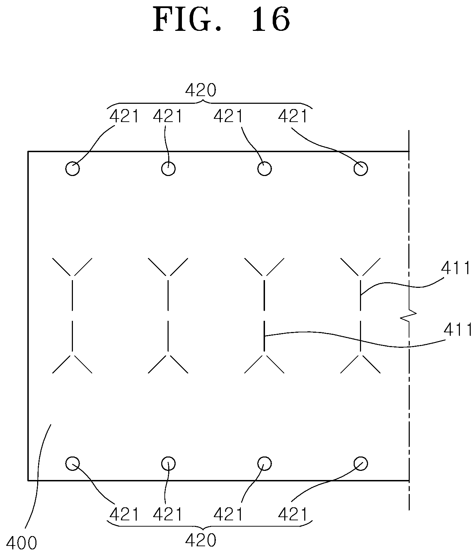

FIG. 16 is a schematic view illustrating a modified example of unit connection holes illustrated in FIG. 15.

Referring to FIG. 16, the unit connection hole 421 according to an embodiment may be formed to have a circular cross section. In an embodiment, a diameter of the unit connection hole 421 may be 5 mm or greater.

In an embodiment, the adhesive member 500 may be injected into each of different unit connection holes 421 and pass through the different unit connection holes 421 to fix the inner sheet 400 between the cap plate 230 and the second holder body 320.

Accordingly, the battery module according to an embodiment can further reduce consumption of the adhesive member 500.

Herein, a battery module according to another embodiment of the present disclosure will be described.

The battery module according to the present embodiment may differ from the battery modules according to the previous embodiments of the present disclosure in a configuration of the inner sheet 400.

Accordingly, in describing the battery module according to the present embodiment, only the configuration of the inner sheet 400 which differs from those of the battery modules according to the previous embodiments of the present disclosure will be described.

The description of the battery modules according to the previous embodiments of the present disclosure may be applied to the remaining components of the battery module according to the present embodiment.

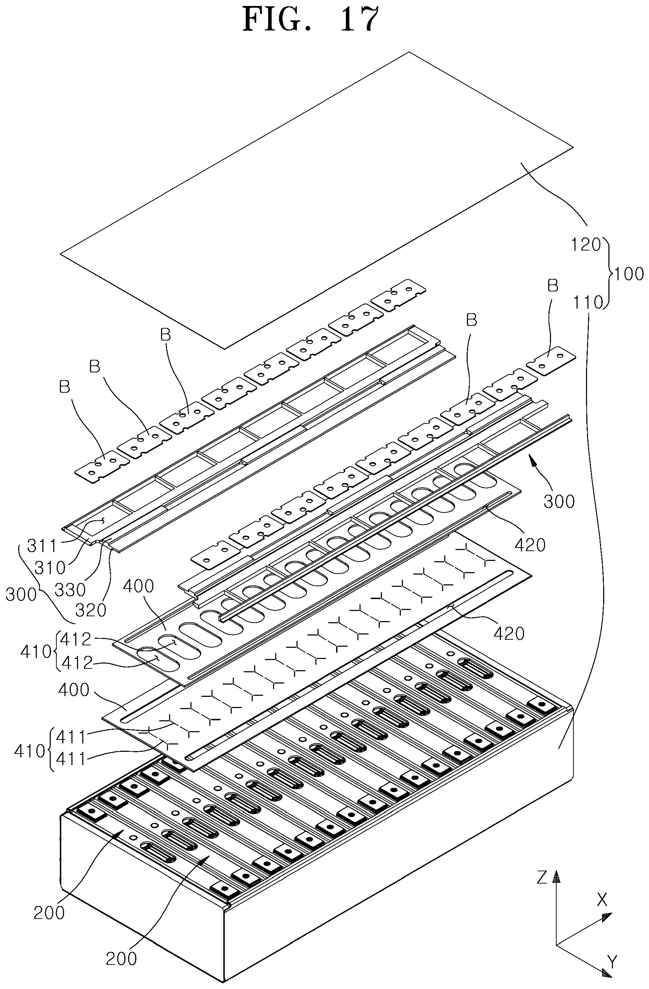

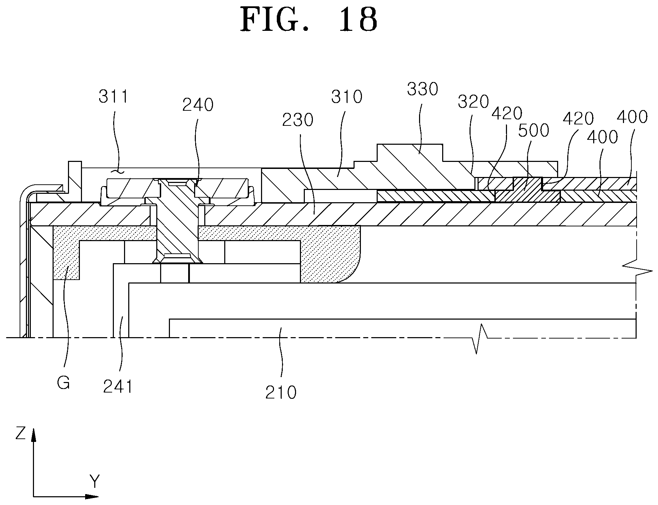

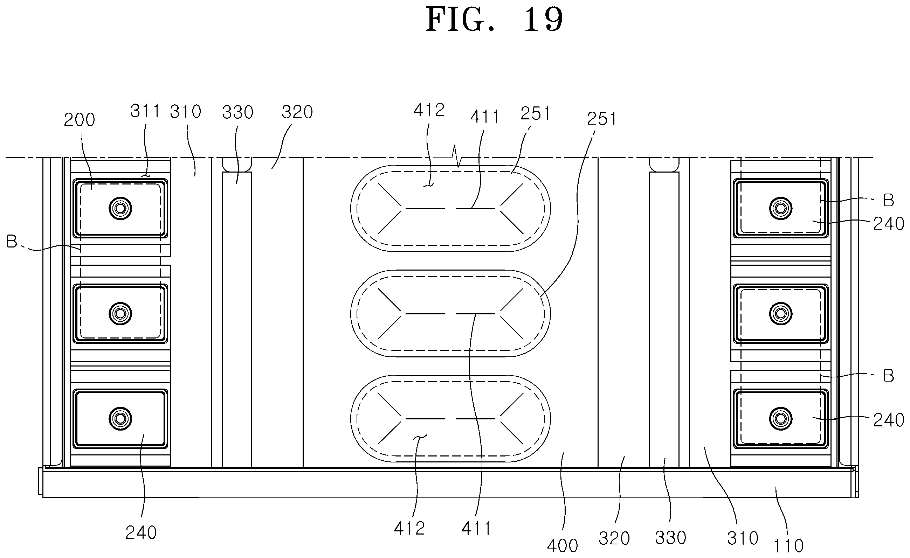

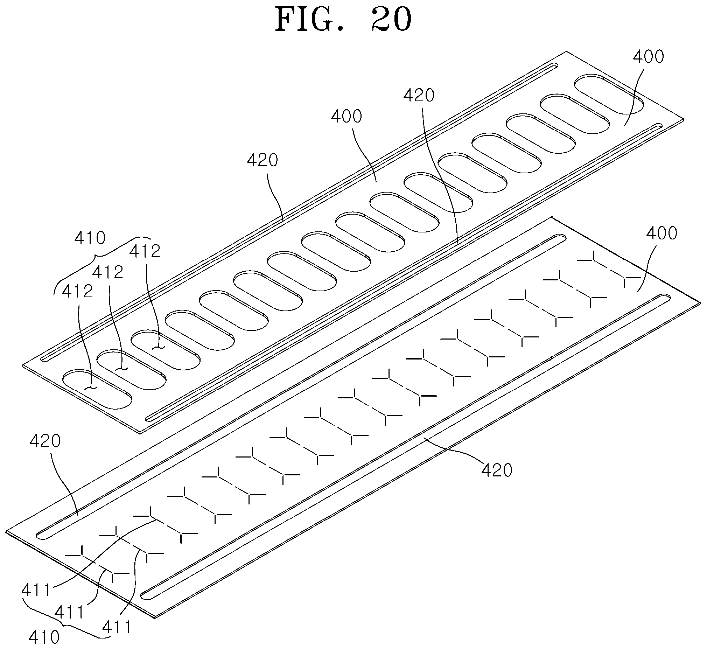

FIG. 17 is a schematic exploded perspective view illustrating a configuration of a battery module according to another embodiment of the present disclosure; FIG. 18 is a schematic cross-sectional view illustrating the configuration of the battery module of FIG. 17; FIG. 19 is a schematic plan view illustrating the configuration of the battery module of FIG. 17; and FIG. 20 is a schematic perspective view illustrating configurations of inner sheets according to an embodiment of the present disclosure.

Referring to FIGS. 17 to 20, the inner sheet 400 according to an embodiment may be provided as a plurality of inner sheets. Although FIGS. 17 to 20 illustrate an example in which the inner sheet 400 is formed as a pair of inner sheets, the inner sheet 400 is not limited thereto and may be formed as three or more inner sheets.

A plurality of inner sheets 400 according to an embodiment may be stacked from the cap plate 230 toward the holder 300. That is, the plurality of inner sheets 400 may be sequentially arranged in the third direction between the cap plate 230 and the second holder body 320.

As an example, the inner sheet 400 may be provided as a pair of inner sheets, and a first inner sheet of the pair of inner sheets 400 may be seated on the cap plate 230 and may be in direct contact with the upper surface of the cap plate 230. The other inner sheet 400 of the pair of inner sheets 400 may be seated on the first inner sheet 400 and may be in direct contact with the lower surface of the second holder body 320.

Accordingly, the battery module according to an embodiment can reinforce insulation and fire resistance performance on the battery cell 200 through the plurality of inner sheets 400 and more effectively prevent or substantially prevent each inner sheet 400 from being damaged due to thermal runaway of the battery cell 200.

An area of each inner sheet 400 can decrease toward the holder 300. As an example, the inner sheet 400 may be formed as a pair of inner sheets, and the area of the inner sheet 400 in direct contact with the cap plate 230 may be formed to be greater than the area of the inner sheet 400 in direct contact with the second holder body 320. The lower surface of the second holder body 320 disposed to face the inner sheet 400 may be formed to be stepped corresponding to a height of each inner sheet 400. Accordingly, each of the plurality of inner sheets 400 may be in stable contact with the single second holder body 320.

The inner vent 410 according to the present embodiment may further include a plurality of inner vent holes 412.

The inner vent hole 412 may have a shape of a hole which vertically passes through the inner sheet 400 in the third direction. That is, the inner vent hole 412 may completely open a part of the inner sheet 400 facing the vent 250. In an embodiment, an area of the inner vent hole 412 may be greater than an area of the vent 250, and, in an embodiment, the vent hole 251.

The plurality of inner vent holes 412 may be arranged in the first direction. Each inner vent hole 412 may be disposed to face the vent 250 of a different battery cell 200 in the third direction.

As an example, the inner vent 410 of the inner sheet 400 of the pair of inner sheets 400, which is in direct contact with the cap plate 230, may include only the inner vent notch 411, and the inner vent 410 of the inner sheet 400 in direct contact with the second holder body 320 may include only the inner vent hole 412. However, the present disclosure is not limited thereto, and the inner vent 410 of the inner sheet 400 in direct contact with the cap plate 230 may include only the inner vent hole 412, or the inner vent 410 of the inner sheet 400 in direct contact with the second holder body 320 may include only the inner vent notch 411, or the inner vent 410 of each inner sheet 400 may include both the inner vent notch 411 and the inner vent hole 412.

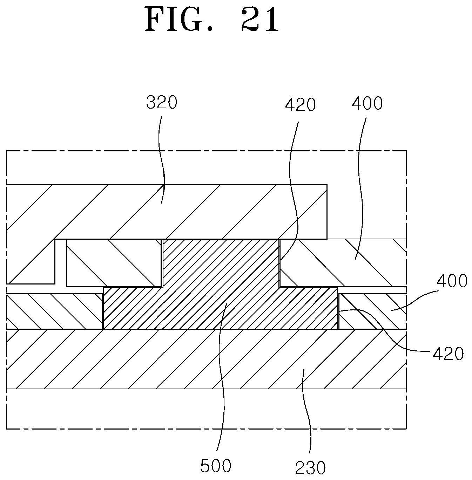

FIG. 21 is a schematic view illustrating an installation state of an adhesive member according to an embodiment of the present disclosure.

Referring to FIG. 21, the connection holes 420 provided in each inner sheet 400 according to an embodiment may be disposed to face each other in the third direction. The connection holes 420 provided in each inner sheet 400 may be connected. In an embodiment, areas of the connection holes 420 provided in each inner sheet 400 may be formed differently.

The adhesive member 500 according to an embodiment may concurrently (e.g., simultaneously) pass through the plurality of inner sheets 400 through the plurality of connection holes 420 facing each other in the third direction. Both, or opposite, end portions of the adhesive member 500 may each be fixed to one of the upper surface of the cap plate 230 and the lower surface of the second holder body 320 to concurrently (e.g., simultaneously) fix the plurality of inner sheets 400.

Herein, a battery module according to another embodiment of the present disclosure will be described.

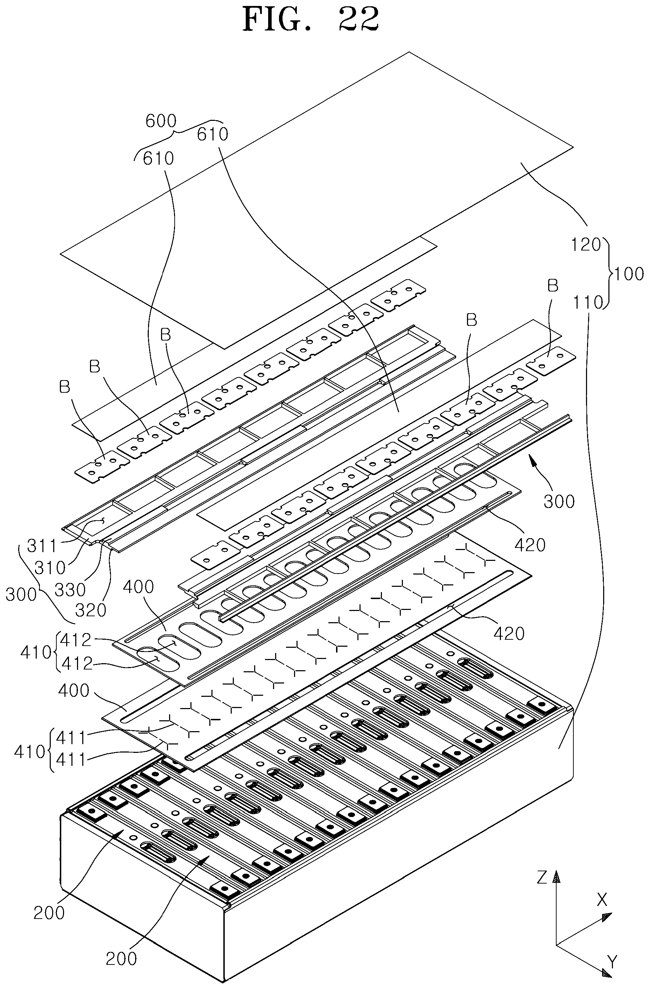

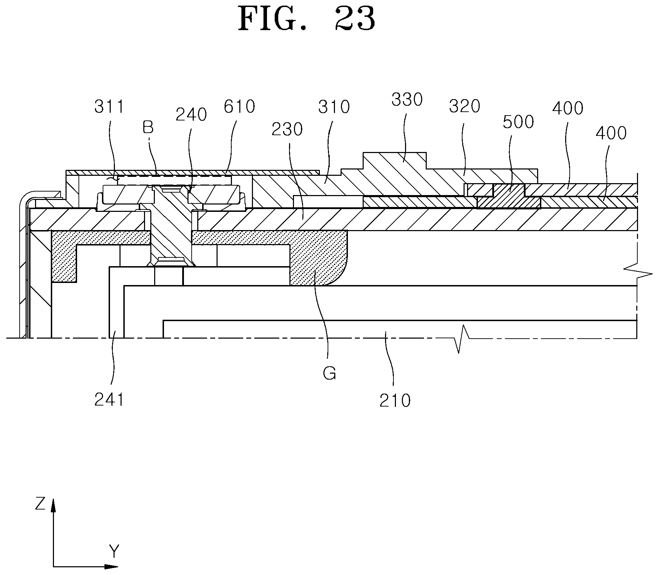

FIG. 22 is a schematic exploded perspective view illustrating a configuration of a battery module according to another embodiment of the present disclosure; and FIG. 23 is a schematic cross-sectional view illustrating the configuration of the battery module of FIG. 22.

Referring to FIGS. 22 and 23, the battery module according to the present embodiment may further include an outer sheet 600.

The battery module according to the present embodiment may differ from the battery modules according to the previous embodiments of the present disclosure in that the battery module includes the outer sheet 600.

Accordingly, in describing the battery module according to the present embodiment, only the outer sheet 600 which is not described in and differs from the battery modules according to the previous embodiments of the present disclosure will be described.

The description of the battery modules according to the previous embodiments of the present disclosure may be applied to the remaining components of the battery module according to the present embodiment.

The outer sheet 600 may be disposed between the holder 300 and the housing 100. The outer sheet 600 may be disposed outside the holder 300 to protect the holder 300, the terminal 240, the bus bar B, and the like from the flame, gas, and the like discharged from the battery cell 200 if thermal runaway of the battery cell 200 occurs.

The outer sheet 600 according to an embodiment may include first outer sheets 610.

The first outer sheets 610 may be disposed between the first holder body 310 and the housing cover 120.

Each of the first outer sheet 610 according to an embodiment may have a shape of a flat plate which is disposed perpendicular to the third direction. A longitudinal direction of the first outer sheet 610 may be the first direction. The first outer sheet 610 may be disposed to face the first holder body 310 in the third direction. The first outer sheet 610 may cover the terminal 240 and the bus bar B on the first holder body 310. The first outer sheet 610 may be disposed to directly face the terminal 240 or the bus bar B through the holder hole 311.

A lower surface of the first outer sheet 610 may be seated on and supported by the first holder body 310. The first outer sheet 610 may be fixed to the first holder body 310 by any of various types of connection methods, such as adhering, bolting, and the like.

The first outer sheet 610 may include any of various types of insulating materials, such as a material with high heat resistance and insulation, for example, mica, aerosol, aerofoam, polyacrylonitrile (PAN) fiber, silicone foam, or the like.

In an embodiment, a thickness of the first outer sheet 610 in the third direction may be 0.1 mm or greater and 3 mm or less. In an embodiment, a ratio of an area of the first outer sheet 610 to a total area of the cap plates 230 of the plurality of battery cells 200 may be 0.15 or more and for example at least 0.15 and/or up to 0.2, up to 0.25, up to 0.3, up to 0.35, up to 0.4, up to 0.45 or up to 0.5.

The first outer sheet 610 may be provided as a pair of first outer sheets. The pair of first outer sheets 610 may be disposed at a distance (e.g., a predetermined distance) from each other in the second direction. Each first outer sheet 610 may be disposed to face a different first holder body 310 in the third direction.

Herein, a battery module according to another embodiment of the present disclosure will be described.

The battery module according to the present embodiment may differ from the battery modules according to the previous embodiments of the present disclosure in a configuration of the holder 300.

Accordingly, in describing the battery module according to the present embodiment, only the configuration of the holder 300 which differs from those of the battery modules according to the previous embodiments of the present disclosure will be described.

The description of the battery modules according to the previous embodiments of the present disclosure may be applied to the remaining components of the battery module according to the present embodiment.

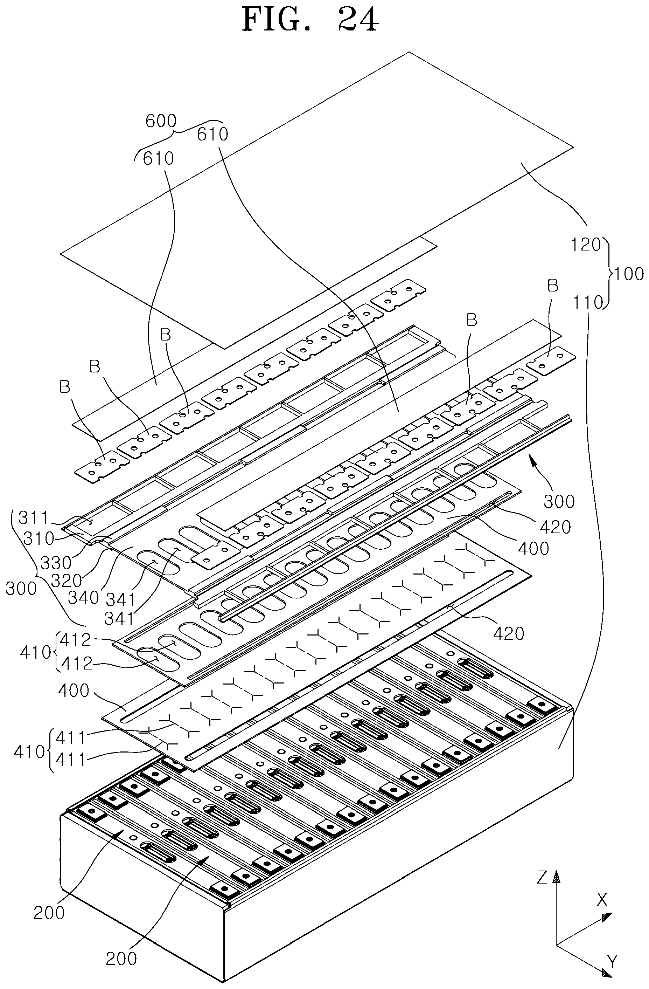

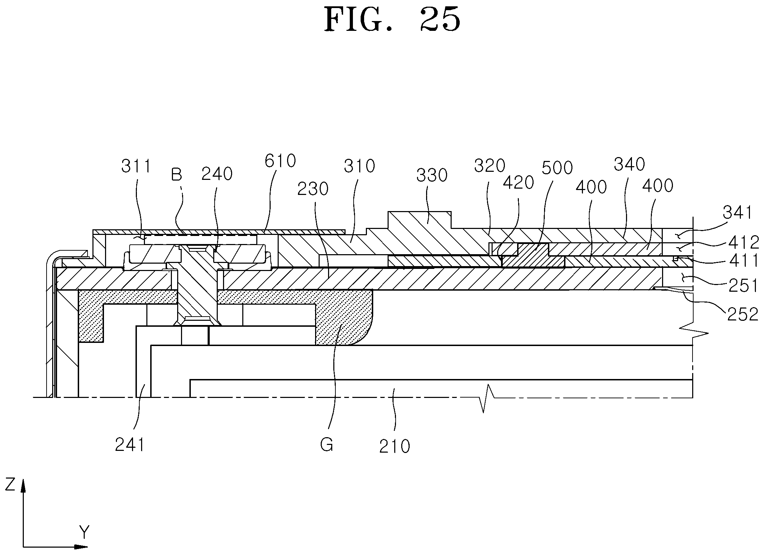

FIG. 24 is a schematic exploded perspective view illustrating a configuration of a battery module according to another embodiment of the present disclosure; and FIG. 25 is a schematic cross-sectional view illustrating the configuration of the battery module of FIG. 24.

Referring to FIGS. 24 and 25, the holder 300 according to the present embodiment may further include a third holder body 340.

The third holder body 340 may be disposed between a pair of second holder bodies 320.

The third holder body 340 according to an embodiment may have a shape of a flat plate which is disposed perpendicular to the third direction. The third holder body 340 may be disposed between inner surfaces of the pair of second holder bodies 320. Both, or opposite, end portions of the third holder body 340 may each be connected to one of the inner surfaces of the pair of second holder bodies 320. The third holder body 340 may be disposed to face the central region of the inner sheet 400 in the third direction.

The third holder body 340 may include a plurality of holder vents 341.

The holder vents 341 provided in the third holder body 340 guide the discharging of the gas and flame discharged through the vent 250.

Each of the holder vents 341 according to an embodiment may have a shape of a hole which vertically passes through the third holder body 340 in the third direction. The holder vent 341 may be disposed to face the vent 250 of the battery cell 200 in the third direction with the inner vent notch 411 and/or the inner vent hole 412 of the inner sheet 400 interposed therebetween. In an embodiment, an area of the holder vent 341 may be greater than the area of the vent 250, and, in an embodiment, the vent hole 251.

A plurality of holder vents 341 may be arranged at distances (e.g., predetermined distances) in the first direction. Each holder vent 341 may be disposed to face a different vent 250. However, a number of holder vents 341 and a distance between neighboring holder vents 341 may be varied depending on a number of vents 250, a distance between the vents 250, or the like.

Herein, a battery module according to another embodiment of the present disclosure will be described.

The battery module according to the present embodiment may differ from the battery modules according to the embodiments shown in FIGS. 22 and 24 in a configuration of the outer sheet 600.

Accordingly, in describing the battery module according to the present embodiment, only the configuration of the outer sheet 600 which differs from those of the battery modules according to the embodiments shown in FIGS. 22 and 24 will be described.

The description of the battery modules according to the embodiments shown in FIGS. 22 and 24 may be applied to the remaining components of the battery module according to the present embodiment.

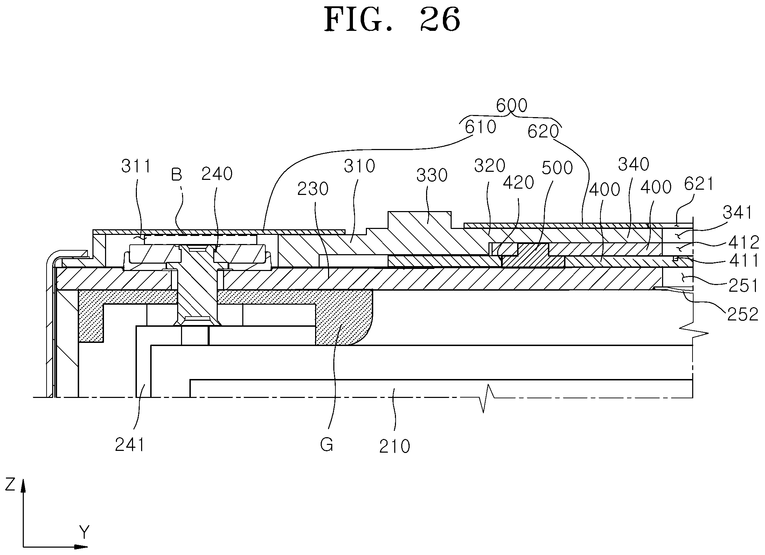

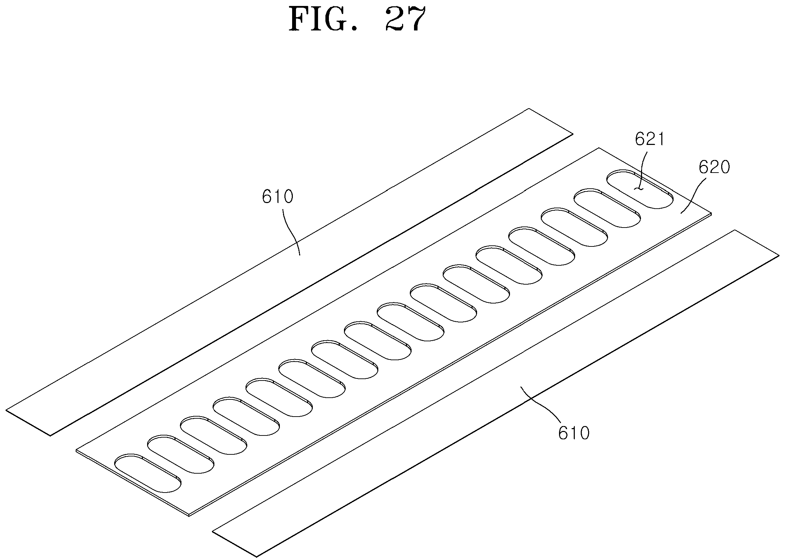

FIG. 26 is a schematic cross-sectional view illustrating a configuration of a battery module according to another embodiment of the present disclosure; and FIG. 27 is a schematic perspective view illustrating a configuration of an outer sheet according to an embodiment of the present disclosure.

Herein, an example in which the holder 300 includes the third holder body 340 will be described, but the holder 300 is not limited thereto and may not include the third holder body 340.

Referring to FIGS. 26 and 27, the outer sheet 600 according to the present embodiment may further include a second outer sheet 620.

The second outer sheet 620 may be disposed to be spaced apart from the first outer sheet 610 and to face the second holder body 320.

The second outer sheet 620 according to an embodiment may have a shape of a flat plate which is disposed perpendicular to the third direction. A longitudinal direction of the second outer sheet 620 may be the first direction. Both, or opposite, end portions of the second outer sheet 620 spaced apart from each other in the second direction may each be disposed to face one of the pair of second holder bodies 320 in the third direction. A central portion of the second outer sheet 620 may be disposed to face the third holder body 340 in the third direction. Accordingly, the second outer sheet 620 can protect the second holder body 320 and the third holder body 340 from gas and flame discharged through the vent 250 if thermal runaway of the battery cell 200 occurs.

A lower surface of the second outer sheet 620 may be seated on and supported by the second holder body 320 and the third holder body 340. The second outer sheet 620 may be fixed to the second holder body 320 and the third holder body 340 by any of various types of connection methods, such as adhering, bolting, and the like.

The second outer sheet 620 may include any of various types of insulating materials, such as a material with high heat resistance and insulation, for example, mica, aerosol, aerofoam, polyacrylonitrile (PAN) fiber, silicone foam, or the like.

In an embodiment, a thickness of the second outer sheet 620 in the third direction may be 0.1 mm or more and 3 mm or less and for example at least 0.1 mm and/or up to 0.12 mm, up to 0.14 mm, up to 0.16 mm, up to 0.18 mm, up to 0.2 mm, up to 0.22 mm, up to 0.24 mm, up to 0.26 mm, up to 0.28 mm or up to 0.3 mm. The thickness of the second outer sheet 620 may correspond to or differ from the thickness of at least one or of both of the first outer sheets 610.

The second outer sheet 620 may include outer vents 621.

The outer vents 621 may be provided in the second outer sheet 620 and guide the discharging of the gas and flame discharged through the vent 250.

The outer vent 621 according to an embodiment may have a shape of a hole which vertically passes through the second outer sheet 620 in the third direction. The outer vent 621 may be disposed to face the vent 250 of the battery cell 200 in the third direction with the inner vent notch 411 and/or the inner vent hole 412 of the inner sheet 400 and the holder vent 341 of the third holder body 340 interposed therebetween. In an embodiment, an area of the outer vent 621 may be greater than the area of the vent 250, and, in an embodiment, the vent hole 251.

The outer vent 621 may be provided as a plurality of outer vents. A plurality of outer vents 621 may be arranged at distances (e.g., predetermined distances) in the first direction. Each outer vent 621 may be disposed to face a different vent 250. A number of outer vents 621 and a distance between neighboring outer vents 621 may be varied depending on a number of vents 250, a distance between the vents 250, or the like.

According to one or more embodiments of the present disclosure, by arranging an inner sheet, which may have high heat resistance and insulation, at a position facing a vent of a battery cell, chain ignition due to thermal runaway of any one battery cell may be prevented or substantially prevented.

According to one or more embodiments of the present disclosure, by more firmly fixing the inner sheet between the battery cell and a holder by an adhesive member, the inner sheet may be prevented or substantially prevented from being lifted or separated by a pressure of a gas discharged through the vent.

According to one or more embodiments of the present disclosure, by arranging a plurality of inner sheets between the battery cell and the holder, chain ignition may be prevented or substantially prevented even if an inner sheet is damaged if the thermal runaway of the battery cell occurs.

According to one or more embodiments of the present disclosure, by arranging an outer sheet outside the holder, the holder and a terminal may be prevented or substantially prevented from being damaged by a flame or a gas generated if the thermal runaway of the battery cell occurs.

However, aspects and effects obtainable through the present disclosure are not limited to the above aspects and effects, and other technical aspects and effects that are not mentioned will be clearly understood by those skilled in the art from the description of the present disclosure.

While the present disclosure has been described with reference to some embodiments shown in the drawings, these embodiments are illustrative and it is to be understood that various modifications and other embodiments can be derived by those skilled in the art on the basis of the embodiments.

## Claims

1. A battery module comprising:
a housing (100);
a plurality of battery cells (200), each of which comprises an electrode assembly (210), a case (220) accommodating the electrode assembly (210), a cap plate (230) sealing the case (220), a pair of terminals (240) protruding from the cap plate (230), and a vent (250) between the terminals (240), the plurality of battery cells (200) being arranged in the housing (100) in a first direction;
a holder (300) arranged in the housing (100) and facing the cap plate (230); and
an inner sheet (400) arranged between the cap plate (230) and the holder (300) to cover the vent (250).

2. The battery module as claimed in claim 1, wherein the holder (300) comprises:
a pair of first holder bodies (310) facing the terminals (240) and spaced apart from each other in a second direction intersecting the first direction; and
a pair of second holder bodies (320) extending from the first holder (300) bodies in the second direction and facing the inner sheet (400).

3. The battery module as claimed in claim 2, wherein a second holder body (320) of the pair of second holder bodies (320) is in contact with the inner sheet (400) and presses the inner sheet (400) toward the cap plate (230).

4. The battery module as claimed in claim 3, wherein the second holder bodies (320) are spaced apart from each other in the second direction, and a distance between the second holder bodies (320) is greater than a length of the vent (250).

5. The battery module as claimed in any of claims 2 to 4, wherein the holder (300) further comprises a third holder body (340) between the second holder bodies (320).

6. The battery module as claimed in claim 5, wherein the third holder body (340) comprises a plurality of holder vents (341) arranged in the first direction and each of which faces the vent (250) of a battery cell (200) of the plurality of battery cells (200).

7. The battery module as claimed in any of claims 2 to 6, wherein the housing (100) comprises:
a housing body (110) accommodating the plurality of battery cells (200); and
a housing cover (120) connected to the housing body (110) and facing the cap plate (230), wherein
the holder (300) further comprises a reinforcing rib (330) protruding from the second holder body (320) toward the housing cover (120).

8. The battery module as claimed in any of claims 2 to 7, wherein the inner sheet (400) comprises a plurality of inner sheets stacked from the cap plate (230) toward the holder (300).

9. The battery module as claimed in claim 8, wherein the inner sheet (400) comprises an inner vent (410) facing the vent (250).

10. The battery module as claimed in claim 9, further comprising an adhesive member (500) between the cap plate (230) and the second holder body (320) and fixing the inner sheet (400).

11. The battery module as claimed in claim 10, wherein the inner sheet (400) further comprises a connection hole (420) spaced apart from the inner vent (410),
the adhesive member (500) passes through the inner sheet (400) through the connection hole (420), and
opposite end portions of the adhesive member (500) are respectively fixed to the cap plate (230) and the second holder body (320).

12. The battery module as claimed in claim 11, wherein the connection hole (420) comprises a plurality of unit connection holes (421) arranged in the first direction.

13. The battery module as claimed in any of claims 2 to 12, further comprising an outer sheet (600) arranged between the holder (300) and the housing (100).

14. The battery module as claimed in claim 13, wherein the outer sheet (600) comprises a pair of first outer sheets (610) spaced apart from each other in the second direction and facing the first holder body (310).

15. The battery module as claimed in claim 14, wherein the outer sheet (600) further comprises a second outer sheet (620) arranged between the first outer sheets (610) and facing the second holder body (320).
